# EUROPÄISCHE PATENTSCHRIFT

(11) **EP 1 233 990 B1**
(45) Veröffentlichungstag und Bekanntmachung des Hinweises auf die Patenterteilung: **18.02.2004**
(21) Anmeldenummer: 00969422.5
(22) Anmeldetag: 05.10.2000
(51) Int. Cl.: C08F 8/32, C10L 1/22, C10M 159/16

(54) **VERFAHREN ZUR HERSTELLUNG POLYISOBUTENPHENOL-HALTIGER MANNICHADDUKTE**
METHOD FOR PRODUCING MANNICH ADDUCTS THAT CONTAIN POLYISOBUTYLENE PHENOL
PROCEDE DE PREPARATION DE PRODUITS D'ADDITION DE MANNICH CONTENANT DU POLY-ISOBUTENPHENOL

(30) Priorität: 06.10.1999 DE 19948114
(43) Veröffentlichungstag der Anmeldung: 28.08.2002
(73) Patentinhaber: BASF AKTIENGESELLSCHAFT, 67056 Ludwigshafen (DE)
(72) Erfinder: LANGE, Arno, 67098 Bad Dürkheim (DE); RATH, Hans, Peter, 67269 Grünstadt (DE); POSSELT, Dietmar, 69120 Heidelberg (DE); TRÖTSCH-SCHALLER, Irene, 67281 Bissersheim (DE); WALTER, Marc, 67227 Frankenthal (DE)
(74) Vertreter: Kinzebach, Werner, Dr.
(86) Internationale Anmeldenummer: PCT/EP2000/009745
(87) Internationale Veröffentlichungsnummer: WO 2001/025293

(56) Entgegenhaltungen:
- EP-A- 0 831 141
- WO-A-96/11999
- US-A- 4 231 759
- US-A- 5 634 951

## Beschreibung

Die vorliegende Erfindung betrifft ein Verfahren zur Herstellung Polyisobutenphenol-haltiger Mannichaddukte, die nach diesem Verfahren erhältlichen Mannichaddukte und die Verwendung der Mannichaddukte als Detergensadditiv in Kraft- und Schmierstoffzusammensetzungen.

Vergaser und Einlasssysteme von Ottomotoren, aber auch Einspritzsysteme für die Kraftstoffdosierung, werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstände verschieben das Luft-Kraftstoff-Verhältnis im Leerlauf und im unteren Teillastbereich, so dass das Gemisch magerer, die Verbrennung unvollständiger wird und damit die Anteile unverbrannter oder teilverbrannter Kohlenwasserstoffe im Abgas größer werden. Steigender Benzinverbrauch ist die Folge.

Es ist bekannt, dass zur Vermeidung dieser Nachteile Kraftstoffadditive zur Reinhaltung von Ventilen und Vergaser bzw. Einspritzsystemen von Ottomotoren verwendet werden (vgl. z. B.: M. Rossenbeck in Katalysatoren, Tenside, Mineralöladditive, Hrsg. J. Falbe, U. Hasserodt, S. 223, G. Thieme Verlag, Stuttgart 1978).

Eine überragende Rolle für derartige Kraftstoffadditive spielen aminoalkylierte Polyalkylenhydroxyaromaten, wie sie in der Regel durch Mannich-Reaktion von Aminen und Aldehyden mit Polyalkylensubstituierten Hydroxyaromaten zugänglich sind. Diese sogenannten Mannichaddukte fallen in der Regel als komplexe Gemische mehrerer aminhaltiger Addukte mit unterschiedlicher Reinigungsaktivität und aminfreier, in der Regel weniger reinigungsaktiver Addukte an.

Solche Mannichaddukte zeigen im Allgemeinen eine gute Reinigungswirkung, sind jedoch mit einer Reihe von Nachteilen behaftet.

Aufgrund der komplexen Zusammensetzung der Gemische beobachtet man oft eine dunkle Färbung und einen intensiven Geruch, die die Kundenakzeptanz negativ beeinflussen. Gravierender ist jedoch, dass solche herkömmlichen Mannichaddukte je nach Zusammensetzung, Kettenlänge des Polyalkylen-Teils im Molekül, nach Motortyp und nach Anwendungskonzentration des Additivs, sogenanntes Ventilstecken verursachen können, welches zum totalen Motorausfall führen kann. Unter "Ventilstecken" versteht man den vollständigen Kompressionsverlust auf einem oder mehreren Zylindern des Verbrennungsmotors, wenn - verursacht durch Polymerablagerungen am Ventilschaft - die Federkräfte nicht mehr ausreichen, die Ventile ordnungsgemäß zu schließen.

So beschreiben eine Reihe von Publikationen, beispielweise die GB-A-1,368,532, die US-A-4,231,759, die US-A-5,634,951 und die US-A-5,725,612 Kraftstoffadditive auf Basis von Mannichaddukten, die aus Polyolefin-substituierten Hydroxyaromaten erhältlich sind. Bei den dort offenbarten Mannichaddukten handelt es sich ausnahmslos um solche, die durch Alkylierung von Phenolen mit niedrigreaktiven Polyolefinen und anschließender Mannich-Reaktion zugänglich sind. Solche niedrigreaktiven Polyolefine werden meist durch Polymerisation von Olefingemischen erzeugt und weisen ein stark uneinheitliches Polymergerüst sowie einen geringen Anteil an endständigen Doppelbindungen auf. Der Einsatz von solchen niedrigreaktiven Polyolefinen zur Herstellung von Mannichaddukten führt zu niedrigen Ausbeuten im Alkylierungsschritt (kleiner 83 %, siehe z. B. US-A-5,634,951), uneinheitlichen Produktverteilungen und mäßiger Reinigungswirkung bei der Verwendung als Kraftstoffadditiv.

Demgegenüber beschreibt die EP-A-0 831 141 verbesserte Detergenzien für Kohlenwasserstofftreibstoffe, die durch eine Mannich-Reaktion eines Polyisobuten-substituierten Phenols aus einem hochreaktiven Polyisobuten, das mindestens 70 % olefinische Doppelbindungen des Vinylidentyps aufweist, einem Aldehyd und Ethylendiamin erhältlich sind. Die bei der Alkylierung eingesetzten Polyisobutene weisen ein mittleres Molekulargewicht von 1.000 auf und führen zu Polyisobuten-substituierten Phenolen, die ein Verhältnis von para- zu ortho-Substitution von etwa 3:1 aufweisen.

Jedoch vermochten auch diese Additive auf Basis von Mannich-Produkten die bekannten Probleme, wie unerwünschte Farbigkeit, unangenehmer Geruch und vor allem das problematische Ventilstecken, nicht zu beseitigen. Zudem ist eine weitere Steigung der Leistungsfähigkeit solcher Kraftstoffadditive wünschenswert, zum einen, um mit den steigenden Anforderungen durch die fortschreitende Motorentechnik Schritt zu halten und zum anderen, um den für die erwünschte Wirkung erforderlichen Konzentrationsbereich für die Additive im Kraftstoff möglichst nach unten zu erweitern.

Aufgabe der vorliegenden Erfindung war es daher, Mannich-Produkte auf Basis von Polyalkylenphenolen mit verbesserten Eigenschaften bereitzustellen. Überraschend wurde nun gefunden, dass man solche Mannichaddukte mit verbesserten Eigenschaften erhält, wenn man spezielle Polyisobuten-substituierte Phenole, die durch Alkylierung von Phenolen mit Polyisobutenen mit einem zahlenmittleren Molekulargewicht von weniger als 1 000 erhältlich sind, mit Formaldehyd oder Oligo- oder Polymeren des Formaldehyds in Gegenwart eines Amins umsetzt. Insbesondere war es überraschend, dass die so erhaltenen Mannichaddukte ein deutlich verbessertes Viskositätsverhalten, insbesondere bei niedrigen Temperaturen, und eine verbesserte Detergenswirkung ohne die verbreiteten Nachteile des Standes der Technik zeigen. Darüber hinaus wurde gefunden, dass sich die so erhaltenen Mannichaddukte durch ein säulenchromatographisches Trennverfahren besonders einfach fraktionieren und damit weiter vereinheitlichen lassen.

Gegenstand der vorliegenden Erfindung ist daher ein Verfahren zur Herstellung Polyisobutenphenol-haltiger Mannichaddukte durch
a) Alkylierung eines Phenols mit hochreaktivem Polyisobuten mit einem zahlenmittleren Molekulargewicht von weniger als 1 000 und einer Polydispersität von kleiner 3,0 bei einer Temperatur unterhalb von etwa 50 °C in Gegenwart eines Alkylierungskatalysators;
b) Umsetzung des Reaktionsproduktes aus a) mit
b1) einem Aldehyd, ausgewählt unter Formaldehyd, einem Oligomer und einem Polymer des Formaldehyds und
b2) wenigstens einem Amin, das wenigstens eine primäre oder eine sekundäre Aminofunktion aufweist.

Geeignete Polyisobutene sind sogenannte "hochreaktive" Polyisobutene, die sich von den "niedrigreaktiven" Polyisobutenen durch den Gehalt an terminal angeordneten ethylenischen Doppelbindungen unterscheiden. Geeignete hochreaktive Polyisobutene sind beispielsweise Polyisobutene, die einen Anteil an vinyliden Doppelbindungen von größer 70 Mol-%, insbesondere größer 80 Mol-% und insbesondere größer 85 Mol-% aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen solche hochreaktiven Polyisobutene ein zahlenmittleres Molekulargewicht von weniger als 900 und insbesondere von weniger als 850 auf. Geeignet sind insbesondere hochreaktive Polyisobutene, die ein zahlenmittleres Molekulargewicht im Bereich von 300 bis 850, besonders bevorzugt 400 bis 800 und ganz besonders bevorzugt 550 bis 800, aufweisen, z. B. ein zahlenmittleres Molekulargewicht von etwa 450, etwa 550 oder etwa 750. Geeignet sind auch Gemische hochreaktiver Polyisobutene, wobei das Gemisch insgesamt ein zahlenmittleres Molekulargewicht von weniger als 1 000 aufweist. Vorzugsweise weisen die hochreaktiven Polyisobutene darüber hinaus eine Polydispersität von kleiner 1,9, insbesondere kleiner 1,7 und besonders bevorzugt von kleiner 1,5, auf. Unter Polydispersität versteht man den Quotienten aus gewichtsmittlerem Molekulargewicht M_{W} geteilt durch das zahlenmittlere Molekulargewicht M_{N}.

Besonders geeignete hochreaktive Polyisobutene sind z. B. die Glissopal®-Marken der BASF AG, insbesondere Glissopal 1000 (M_{N} = 1 000) und Glissopal V 33 (M_{N} = 550) und deren Mischungen mit einem zahlenmittleren Molekulargewicht M_{N} < 1 000. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden. Ebenso sind sie durch Direktsynthese zugänglich.

Mit solch einem hochreaktiven Polyisobuten wird nun in einem ersten Schritt (Schritt a)) ein Phenol umgesetzt (alkyliert). Geeignet für die Umsetzung mit hochreaktiven Polyisobutenen sind ganz allgemein aromatische Hydroxyverbindungen, wie unsubstituiertes Phenol und ein- oder zweifach substituierte Phenole. Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Als substituierte Phenole sind insbesondere einfach orthosubstituierte Phenole geeignet. Geeignete Substituenten sind z. B. C₁-C₂₀-Alkylsubstituenten, C₁-C₂₀-Alkoxysubstituenten oder ein weiterer Polyalkylenrest, insbesondere Polyalkylenreste auf Basis von hochreaktiven Polyisobutenen. Insbesondere geeignet als Substituenten sind C₁-C₇-Alkylreste, wie Methyl, Ethyl, n-Propyl, iso-Propyl, n-Butyl, sek.-Butyl, tert.-Butyl und Hexyl. Besonders geeignete alkylsubstituierte Phenole sind 2-Methylphenol und 2-Ethylphenol. Besonders bevorzugt für die Alkylierung mit Polyisobutenen ist unsubstituiertes Phenol.

Bei der Alkylierung wird das Phenol üblicherweise im Überschuss eingesetzt. Geeignet ist beispielsweise ein etwa 1,1 bis 6-facher, bevorzugt 1,6 bis 5-facher Überschuss, wie etwa ein 2-facher oder ein etwa 4-facher Überschuss des Phenols. Das erhaltene Rohprodukt wird, gegebenenfalls nach Aufreinigung, unter b) weiter umgesetzt.

In einer Ausführungsform des vorliegenden Verfahrens wird bei der Herstellung des Polyisobutenphenols das Phenol im Überschuss eingesetzt und nach erfolgter Umsetzung das Reaktionsgemisch durch Extraktion mit Lösungsmitteln, vorzugsweise polaren Lösungsmitteln, wie Wasser oder C₁-C₆-Alkanolen oder Gemische davon, durch Strippen, d. h. durch Durchleiten von Wasserdampf oder gegebenenfalls Erhitzen von Gasen, z. B. Stickstoff, oder destillativ vom überschüssigen Phenol befreit.

Die Alkylierung des Phenols wird unterhalb von etwa 50 °C, vorzugsweise unterhalb von 35 °C und insbesondere unterhalb von 25 °C, in Gegenwart eines Alkylierungskatalysators durchgeführt. In der Regel wird die Alkylierung bei Temperaturen oberhalb von - 40 °C, vorzugsweise oberhalb von -30 °C und insbesondere oberhalb von -20 °C, durchgeführt. Besonders geeignet für die Alkylierung sind Temperaturen im Bereich von -10 bis +30 °C, insbesondere im Bereich von -5 bis +25 °C und besonders bevorzugt von 0 bis +20 °C.

Geeignete Alkylierungskatalysatoren sind dem Fachmann bekannt. Geeignet sind beispielsweise Protonensäuren, wie Schwefelsäure, Phosphorsäure und organische Sulfonsäuren, z. B. Trifluormethansulfonsäure, Lewissäuren, wie Aluminiumtrihalogenide, z. B. Aluminiumtrichlorid oder Aluminiumtribromid, Bortrihalogenide, z. B. Bortrifluorid und Bortrichlorid, Zinnhalogenide, z. B. Zinntetrachlorid, Titanhalogenide, z. B. Titantetrabromid und Titantetrachlorid; und Eisenhalogenide, z. B. Eisentrichlorid und Eisentribromid. Bevorzugt sind Addukte von Bortrihalogeniden, insbesondere Bortrifluorid, mit Elektronendonoren, wie Alkoholen, insbesondere C₁-C₆-Alkanolen oder Phenolen, oder Ethern. Besonders bevorzugt sind Bortrifluoridetherat und Bortrifluoridphenolat.

Die Alkylierung wird vorzugsweise in einem flüssigen Medium durchgeführt. Dazu wird das Phenol vorzugsweise in einem der Reaktanden und/oder einem Lösungsmittel, gegebenenfalls unter Erwärmen, gelöst. In einer bevorzugten Ausführungsform wird daher die Alkylierung so durchgeführt, dass das Phenol oder das substituierte Phenol zuerst unter Zufuhr von Wärme geschmolzen und anschließend mit einem geeigneten Lösungsmittel und/oder dem Alkylierungskatalysator, insbesondere dem Bortrihalogenid-Addukt, versetzt wird. Danach wird das flüssige Gemisch auf eine geeignete Reaktionstemperatur gebracht. In einer weiteren bevorzugten Ausführungsform wird das Phenol erst aufgeschmolzen und mit dem Polyisobuten und gegebenenfalls einem geeigneten Lösungsmittel versetzt. Das so erhaltene flüssige Gemisch kann auf eine geeignete Reaktionstemperatur gebracht und anschließend mit dem Alkylierungskatalysator versetzt werden.

Geeignete Lösungsmittel für die Durchführung dieser Reaktion sind beispielsweise Kohlenwasserstoffe, vorzugsweise Pentan, Hexan und Heptan, insbesondere Hexan, Kohlenwasserstoffgemische, z. B. Petroleumbenzine mit Siedebereichen zwischen 35 und 100 °C, Dialkylether, insbesondere Diethylether und halogenierte Kohlenwasserstoffe, wie Dichlormethan oder Trichlormethan sowie Mischungen der vorgenannten Lösungsmittel.

Die Reaktion wird vorzugsweise durch die Zugabe des Katalysators oder eines der beiden Reaktanden, Phenol oder Polyisobuten, eingeleitet. Die Zugabe der die Reaktion einleitenden Komponente erfolgt vorzugsweise über einen Zeitraum von 5 bis 300 Minuten, bevorzugt 10 bis 200 und insbesondere 15 bis 180 Minuten, wobei die Temperatur des Reaktionsgemisches vorteilhaft die oben angegebenen Temperaturbereiche nicht überschreitet. Nach beendeter Zugabe lässt man das Reaktionsgemisch vorzugsweise 30 Minuten bis 24 Stunden, insbesondere 60 Minuten bis 16 Stunden, bei einer Temperatur unterhalb von 30 °C nachreagieren. Dabei werden die Reaktionsbedingungen vorzugsweise so gewählt, dass wenigstens 85 %, insbesondere wenigstens 90 % und besonders bevorzugt wenigstens 95 % des Polyisobutenphenols entstehen. Die so erhaltenen Polyisobuten-substituierten Phenole bestehen vorzugsweise (sofern es die als Edukt eingesetzte aromatische Hydroxyverbindung zulässt) zu mehr als 85 %, insbesondere mehr als 90 % und besonders bevorzugt zu mehr als 95 % aus Isomeren, deren Polyisobutenrest paraständig zur Hydroxygruppe des Phenols ist.

Vorzugsweise enthält das für die Folgeumsetzung in den Schritten b) und c) eingesetzte Alkylierungsprodukt keine oder nur geringe Mengen an nicht umgesetzten Phenolen.

Sofern die zur Alkylierung in Schritt a) eingesetzte aromatische Hydroxyverbindung Mehrfachalkylierungen zulässt, erfolgt die Reaktionsführung vorzugsweise so, dass Polyisobutenylphenole erhalten werden, die nicht oder nur zu einem geringen Anteil mehr als einfach mit dem Polyisobuten alkyliert sind. Dabei enthalten die zur Folgeumsetzung in den Schritten b) oder c) eingesetzten Alkylierungsprodukte höchstens 20 Mol-%, bevorzugt höchstens 10 Mol-%, insbesondere höchstens 5 Mol-% mehr als einfach alkylierte Phenole, bezogen auf die Gesamtmenge an Alkylierungsprodukten.

Das unter a) erhaltene Reaktionsprodukt wird unter b) mit einem Aldehyd, ausgewählt unter Formaldehyd, einem Oligomer und/oder einem Polymer des Formaldehyds (b1) und wenigstens einem Amin, das wenigstens eine primäre oder wenigstens eine sekundäre Aminofunktion aufweist (b2), umgesetzt. Diese Reaktion wird in der Regel als Mannich- oder Mannich-analoge Reaktion bezeichnet. Aldehyd steht hier synonym für Formaldehyd freisetzende Verbindung bzw. Formaldehyd.

Geeignete Aldehyde sind insbesondere Formaldehyd, Formalinlösungen, Formaldehydoligomere, z. B. Trioxan, oder Polymere des Formaldehyds, wie Paraformaldehyd. Bevorzugt wird Paraformaldehyd eingesetzt. Formalinlösung ist besonders leicht zu handhaben. Selbstverständlich kann man auch gasförmiges Formaldehyd einsetzen.

Geeignete Amine weisen wenigstens eine primäre oder sekundäre Aminofunktion auf. Primäre Aminofunktionen im Sinne dieser Erfindung sind Aminofunktionen der Formel HNR⁴R^{5,} wobei einer der Reste R⁴ oder R⁵ für ein Wasserstoffatom steht und der andere Rest unter von Wasserstoff verschiedenen Substituenten ausgewählt ist.

Sekundäre Aminofunktionen im Sinne dieser Erfindung sind Aminofunktionen der Formel HNR⁴R^{5,} wobei die Reste R⁴ und R⁵ unter von Wasserstoff verschiedenen Substituenten ausgewählt sind.

Vorzugsweise sind die Reste R⁴ und R⁵ ausgewählt unter Wasserstoff, C₁- bis C₂₀-Alkyl-, C₃- bis C₈-Cycloalkyl- und C₁- bis C₂₀-Alkoxyresten, die durch Heteroatome, ausgewählt unter N und O, unterbrochen und/oder substituiert sein können, wobei die Heteroatome wiederum Substituenten, vorzugsweise ausgewählt unter H, C₁-C₆-Alkyl, Aryl und Heteroaryl, tragen können; oder R⁴ und R⁵ bilden gemeinsam mit dem N-Atom, an das sie gebunden sind, einen 5- oder 6-gliedrigen Cyclus, der ein oder zwei Heteroatome, ausgewählt unter N und O aufweisen und mit einem, zwei oder drei C₁- bis C₆-Alkylresten substituiert sein kann. Weiterhin können R⁴ und R⁵ auch für Aryl- und Heteroarylreste stehen. Aryl- und Heteroarylreste weisen gegebenenfalls einen bis drei Substituenten, ausgewählt z. B. unter Hydroxy und den vorgenannten Alkyl-, Cycloalkyl- oder Alkoxyresten und Polyisobutenresten, auf.

Geeignete Reste R⁴, R⁵ sind beispielsweise Wasserstoff, Methyl, Ethyl, n-Propyl, sek.-Propyl, Isopropyl, n-Butyl, iso-Butyl, sek.-Butyl, tert.-Butyl, n-Pentyl und n-Hexyl, 5-, 6- und 7-gliedrige gesättigte, ungesättigte oder aromatischen Carbo- und Heterocyclen, wie Cyclopentyl, Cyclohexyl, Phenyl, Toloyl, Xylyl, Cycloheptanyl, Naphthyl, Tetrahydrofuranyl, Tetrahydropyranyl, Dioxanyl, Pyrrolidyl, Piperidyl, Pyridyl und Pyrimidyl.

Geeignete Verbindungen der Formel HNR⁴R^{5,} die ausschließlich eine primäre Aminofunktion aufweisen, sind beispielsweise Methylamin, Ethylamin, n-Propylamin, Isopropylamin, n-Butylamin, iso-Butylamin, sek.-Butylamin, tert.-Butylamin, Pentylamin, Hexylamin, Cyclopentylamin, Cyclohexylamin, Anilin und Benzylamin.

Geeignete Verbindungen der Formel HNR⁴R^{5,} die ausschließlich eine primäre Aminofunktion aufweisen und bei denen der Rest R⁴ oder R⁵ für durch das Heteroatom O unterbrochene und/oder substituierte Alkylreste steht, sind beispielweise CH₃-O-C₂H₄-NH₂, C₂H₅-O-C₂H₄-NH₂, CH₃-O-C₃H₆-NH₂, C₂H₅-O-C₃H₆-NH₂, n-C₄H₉-O-C₄H₈-NH₂, HO-C₂H₄-NH₂, HO-C₃H₇-NH₂ und HO-C₄H₈-NH₂.

Geeignete Verbindungen der Formel HNR⁴R^{5,} die ausschließlich eine sekundäre Aminofunktion aufweisen, sind beispielweise Dimethylamin, Diethylamin, Methylethylamin, Di-n-propylamin, Diisopropylamin, Diisobutylamin, Di-sek.-butylamin, Di-tert.-butylamin, Dipentylamin, Dihexylamin, Dicyclopentylamin, Dicyclohexylamin und Diphenylamin.

Geeignete Verbindungen der Formel HNR⁴R^{5,} die ausschließlich eine sekundäre Aminofunktion aufweisen und bei denen der Rest R⁴ und R⁵ für durch das Heteroatom O unterbrochene und/oder substituierte Alkylreste steht, sind beispielweise (CH₃-O-C₂H₄)₂NH, (C₂H₅-O-C₂H₄)₂NH, (CH₃-O-C₃H₆)₂NH, (C₂H₅-O-C₃H₆)₂NH, (n-C₄H₉-O-C₄H₈)₂NH, (HO-C₂H₄)₂NH, (HO-C₃H₆)₂NH und (HO-C₄H₈)₂NH.

Geeignete Verbindungen der Formel HNR⁴R^{5,} bei denen R⁴ und R⁵ gemeinsam mit dem N-Atom, an das sie gebunden sind, einen 5-, 6-oder 7-gliedrigen Cyclus bilden, der ein oder zwei Heteroatome, ausgewählt unter N und O, aufweisen und mit einem, zwei oder drei C₁- bis C₆-Alkylresten substituiert sein kann, sind beispielsweise Pyrrolidin, Piperidin, Morpholin und Piperazin sowie deren substituierte Derivate, wie N-C₁ bis C₆-Alkylpiperazine und Dimethylmorpholin.

Geeignete Verbindungen der Formel HNR⁴R⁵, die durch N unterbrochene und/oder substituierte Alkylreste aufweisen, sind Alkylendiamine, Dialkylentriamine, Trialkylentetramine und Polyalkylenpolyamine, wie Oligo- oder Polyalkylenimine, insbesondere Oligooder Polyethylenimine, bevorzugt Oligoethylenimine, bestehend aus 2 bis 20, vorzugsweise 2 bis 10 und besonders bevorzugt 2 bis 6 Ethylenimineinheiten. Geeignete solche Verbindungen sind insbesondere n-Propylendiamin, 1,4-Butandiamin, 1,6-Hexandiamin, Diethylentriamin, Triethylentetramin und Polyethylenimine, sowie deren Alkylierungsprodukte, die wenigstens eine primäre oder sekundäre Aminofunktion aufweisen, z. B. 3-(Dimethylamino)-n-propylamin, N,N-Dimethylethylendiamin, N,N-Diethylethylendiamin und N,N,N',N'-Tetramethyldiethylentriamin. Ebenfalls geeignet ist Ethylendiamin.

Weitere geeignete Verbindungen der Formel HNR⁴R⁵ sind die Umsetzungsprodukte von Alkylenoxiden, insbesondere Ethylenoxid, mit primären Aminen, sowie Copolymerisate von Ethylenoxid mit Ethylenimin und/oder primären oder sekundären C₁- bis C₆-Alkylaminen.

Bevorzugte Verbindungen der Formel HNR⁴R⁵ sind 3-(Dimethylamino)-n-propylamin, Di[3-(dimethylamino)-n-propyl]amin, Di[3-(diethylamino)-n-propyl]amin, Di[2-(dimethylamino)ethyl]amin, Dimethylamin, Diethylamin, Di-n-propylamin, Diisopropylamin, Dicyclohexylamin, Pyrrolidin, Piperidin, Morpholin, Dimethylmorpholin, N-Methylpiperazin, HO-C₂H₄-NH₂, (HO-C₂H₄)₂NH, H₃C-O-(CH₂)₂-NH₂, H₃C-O-(CH₂)₃-NH₂, Diethylentriamin, Triethylentetramin, N,N-Diethylethylendiamin, N,N,N',N'-Tetramethyldiethylentriamin und Polyethylenimine.

Besonders bevorzugte Verbindungen der Formel HNR⁴R⁵ sind 3-(Dimethylamino)-n-propylamin, Di[3-(dimethylamino)-n-propyl]amin, Dimethylamin, Diethylamin und Morpholin.

Die für die Umsetzung b) geeigneten Reaktionstemperaturen hängen von einer Reihe von Faktoren ab. Bei der (Mannich-)Reaktion entsteht Reaktionswasser. In der Regel wird dieses aus dem Reaktionsgemisch entfernt. Das Reaktionswasser kann während der Reaktion, am Ende der Reaktionszeit oder nach beendeter Reaktion entfernt werden, beispielsweise destillativ. Vorteilhaft lässt sich das Reaktionswasser durch Erhitzen des Reaktionsgemisches in Gegenwart von Schleppmitteln entfernen. Geeignet als Schleppmittel sind beispielsweise organische Lösungsmittel, die mit Wasser ein Azeotrop bilden und/oder einen Siedepunkt oberhalb des Siedepunktes von Wasser aufweisen.

Besonders geeignete Schleppmittel sind Paraffine, Benzol und Alkylaromaten, insbesondere Toluol, Xylole und Mischungen von Alkylaromaten mit anderen (hochsiedenden) Kohlenwasserstoffen. In der Regel wird das Entfernen des Reaktionswasser bei einer Temperatur durchgeführt, die in etwa dem Siedepunkt des Schleppmittels oder des Azeotrops aus Wasser und Schleppmittel entspricht.

Geeignete Temperaturen für das Entfernen des Reaktionswassers liegen daher bei Normaldruck im Bereich von 75 bis 200 °C, bevorzugt 80 bis 180 °C, und besonders bevorzugt im Bereich von 80 bis 150 °C. Wird das Reaktionswasser bei vermindertem Druck entfernt, sind die Temperaturen entsprechend den erniedrigten Siedetemperaturen zu verringern.

Geeignete Reaktionstemperaturen für die (Mannich-)Reaktion liegen vorzugsweise im Bereich von 10 bis 200 °C, insbesondere im Bereich von 20 bis 180 °C, z. B. etwa 35 °C, etwa 90 °C, etwa 120 °C oder etwa 140 °C.

In einer bevorzugten Ausführungsform wird die (Mannich-)Reaktion und das Entfernen des Reaktionswassers etwa bei Atmosphärendruck und einer Temperatur von etwa 80 °C, etwa 110 °C oder etwa 130 °C mit aromatischen Lösungsmitteln, vorzugsweise Toluol, Xylolen oder Gemischen davon, als Schleppmittel durchgeführt. Die (Mannich-)Reaktion wird vorzugsweise so durchgeführt, dass die Reaktanden in einem Temperaturbereich zwischen 10 und 50 °C zusammengegeben werden, gegebenenfalls 10 bis 300 Minuten in diesem Temperaturbereich vermischt werden, und anschließend innerhalb von 5 bis 180 Minuten, bevorzugt 10 bis 120 Minuten, auf die zur destillativen Entfernung des Reaktionswassers nötige Temperatur gebracht werden.

Die Gesamtreaktionszeit für die Umsetzung der Polyisobutenphenole zu den Mannichaddukten liegt im Allgemeinen zwischen 10 Minuten und 24 Stunden, vorzugsweise zwischen 30 Minuten und 16 Stunden und besonders bevorzugt zwischen 60 Minuten und 8 Stunden.

Bei der unter b) durchgeführten Mannich-Reaktion setzt man in der Regel 0,5 bis 3,0 Mol, vorzugsweise 0,5 bis 2,0 Mol und insbesondere 0,8 bis 1,5 Mol Aldehyd (b1), sowie 0,5 bis 3,0 Mol, vorzugsweise 0,5 bis 2,0 Mol und insbesondere 0,8 bis 1,5 Mol Amin (b2), bezogen auf 1 Mol Polyisobutenphenol aus a) ein.

In einer bevorzugten Ausführungsform des erfindungsgemäßen Verfahrens werden die Reaktanden Aldehyd, Amin und Polyisobutenphenol in einem etwa äquimolaren Verhältnis, einem Verhältnis von etwa 2:2:1 oder, insbesondere wenn es sich bei dem Amin um ein primäres Amin handelt, im Verhältnis von etwa 2:1:1 eingesetzt. Damit lässt sich in der Regel ein weitgehend einheitliches Produktbild mit einem hohen Anteil an aminhaltigen Verbindungen erreichen. Dabei führt ein etwa äquimolares Verhältnis der Reaktanden zur bevorzugten Bildung von mono-aminomethylierten Verbindungen, ein Verhältnis der Reaktanden von etwa 2:2:1 zur bevorzugten Bildung von bisaminomethylierten Verbindungen und ein Verhältnis der Reaktanden von etwa 2:1:1 zur bevorzugten Bildung von mono-aminomethylierten Verbindungen mit Benzoxazin-Struktur, beispielsweise der Formel Ib.

Die unter b) beschriebene Umsetzung kann beispielsweise so durchgeführt werden, dass Polyisobutenphenol, Amin und Aldehyd zusammengegeben und das Reaktionsgemisch auf die gewünschte Reaktionstemperatur, vorzugsweise in den vorstehend genannten Temperaturbereichen, gebracht wird. Die unter b) beschriebene Umsetzung kann auch so durchgeführt werden, dass das Polyisobutenphenol und gegebenenfalls ein Lösungsmittel zuerst mit dem Aldehyd versetzt und gegebenenfalls auf die Reaktionstemperatur erwärmt wird und anschließend wenigstens ein Amin zugegeben wird. Die Zugabe des Amins kann in einer Portion oder über einen Zeitraum vom 5 bis 300 Minuten, vorzugsweise 10 bis 150 Minuten durch mehrmaliges portionsweises Zugeben oder kontinuierliches Zugeben erfolgen. Die unter b) beschriebene Umsetzung kann auch so durchgeführt werden, dass zuerst Polyisobutenphenol und gegebenenfalls Lösungsmittel und Amin zusammengegeben, gegebenenfalls auf Reaktionstemperatur erwärmt und anschließend mit dem Aldehyd versetzt werden, wobei die Zugabe des Aldehyds wie vorstehend für das Amin beschrieben erfolgen kann.

In einer bevorzugten Ausführungsform werden Aldehyd, Amin und gegebenenfalls Lösungsmittel zusammengegeben und gegebenenfalls unter Erwärmen auf vorstehend beschriebene Temperaturbereiche und innerhalb der vorstehend beschriebenen Reaktionszeiten zur Reaktion gebracht. Während oder nach der Reaktion kann gebildetes Reaktionswasser gewünschtenfalls, wie vorstehend beschrieben, entfernt werden. Das so erhaltene Reaktionsprodukt aus Amin und Aldehyd kann gewünschtenfalls gereinigt und/oder isoliert werden. Anschließend werden das Reaktionsprodukt aus Amin und Aldehyd und das Polyisobutenphenol miteinander versetzt, wobei das Zusammengeben in einer Portion, in mehreren Portionen oder kontinuierlich in den vorstehend genannten Zeiträumen erfolgen kann. Durch dieses Vorgehen lässt sich in vielen Fällen ein besonders einheitliches Produktbild erreichen, insbesondere, wenn die Reaktanden in etwa äquimolaren Mengen oder einem stöchiometrischen Verhältnis von Aldehyd, Amin und Polyisobutenphenol von etwa 1:2:1 oder etwa 2:2:1 oder etwa 2:1:1 eingesetzt werden.

In einer weiteren Ausführungsform können die Polyisobutenphenole in einer Mannich-analogen Reaktion mit Aminalen oder Halbaminalen zu Mannichaddukten umgesetzt werden. Solche Aminale oder Halbaminale sind aus den vorstehend genannten Aldehyden und Aminen zugänglich und können in einer Ein-Topf-Reaktion in Gegenwart der Polyisobutenphenole erzeugt oder separat hergestellt werden, z. B. wie in der vorstehenden Ausführungsform beschrieben. Solche Halbaminale können mit C₁-C₁₂-Alkanolen verethert oder C₁-C₁₂-Carbonsäuren verestert sein. Geeignete Aminale sind beispielsweise N,N,N',N'-Tetramethylmethylendiamin, N,N,N',N'-Tetraethylmethylendiamin, Bis{Di[3-(dimethylamino)-n-propyl]amino}methan, Bis(morpholino)methan und Bis(4-methylpiperazino)methan. Geeignete Halbaminale sind beispielsweise N-Hydroxymethylmorpholin und N-Hydroxymethyldiisopropylamin.

In einer weiteren Ausführungsform wird das Polyisobutenphenol durch geeignete Wahl der Stöchiometrie zu bisaminomethylierten Mannichaddukten umgesetzt. Zur Herstellung der Bisaddukte werden vorzugsweise Aldehyd und Amine in ungefähr zwei- bis dreifachem Überschuss bzw. Aminale oder Halbaminale im zwei- bis dreifachen Überschuss eingesetzt und gegebenenfalls die Reaktionszeit verlängert.

In der Regel erhält man nach den erfindungsgemäßen Verfahren ein Adduktgemisch, das mindestens 40 Mol-%, häufig mindestens 50 Mol-% und besonders bevorzugt mindestens 60 Mol-%, Verbindungen der Formel Ia und/oder Ib umfasst, 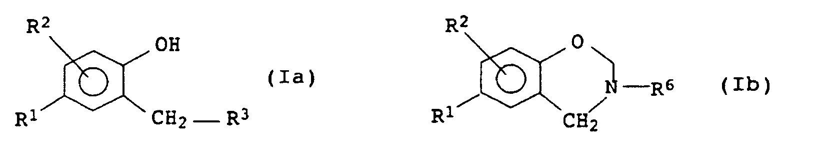 worin
- R¹: für einen terminal gebundenen Polyisobutenrest,
- R²: für H, C₁ bis C₂₀-Alkyl, C₁ bis C₂₀-Alkoxy, Hydroxy, einen Polyalkylenrest oder CH₂NR⁴R⁵ steht, wobei R⁴ und R⁵ die unten angegebenen Bedeutungen aufweist, und
- R³: für NR⁴R⁵ steht, worin R⁴ und R⁵ unabhängig voneinander ausgewählt sind unter H, C₁ bis C₂₀-Alkyl-, C₃ bis C₈-Cycloalkyl- und C₁ bis C₂₀-Alkoxyresten, die durch Heteroatome, ausgewählt unter N und O, unterbrochen und/oder substituiert sein können, und Phenolresten der Formel II, 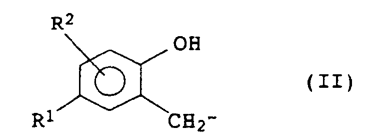 worin R¹ und R² wie oben definiert sind;
mit der Maßgabe, dass R⁴ und R⁵ nicht gleichzeitig für H oder Phenolreste der Formel II stehen; oder R⁴ und R⁵ gemeinsam mit dem N-Atom, an das sie gebunden sind, einen 5-, 6- oder 7-gliedrigen Cyclus bilden, der ein oder zwei Heteroatome, ausgewählt unter N und O, aufweist und mit einem, zwei oder drei C₁ bis C₆-Alkylresten substituiert sein kann; und
- R⁶: für einen von H verschiedenen Rest R⁴ oder R⁵ steht.

Die Verbindungen der Formel Ib (Dihydrobenzoxazine) können in Gegenwart von Formaldehydquellen oder Formaldehydäquivalente aus Verbindungen der Formel Ia gebildet werden, in denen R⁴ oder R⁵ für H steht.

Bevorzugte Bedeutungen der Reste R¹ bis R⁶ leiten sich von den vorstehend beschriebenen Polyisobutenen, Phenolen, Formaldehydquellen bzw. Formaldehydäquivalenten und Aminen ab.

Vorzugsweise handelt es sich bei den Mannichaddukten der Formel Ia und/oder Ib um monomolekulare Polyisobutenphenol-Amine, die nur eine Polyisobutenphenol-Einheit pro Molekül aufweisen. Oligomere Polyisobutenphenolamine mit zwei, drei oder mehrerer Polyisobutenphenol-Einheiten pro Molekül, werden nicht oder nur in geringem Umfang gebildet.

In vielen Fällen erhält man nach dem erfindungsgemäßen Verfahren ein Adduktgemisch, das mindestens 40 Mol-%, häufig mindestens 50 Mol-% und besonders bevorzugt mindestens 60 Mol-% einer Verbindung, ausgewählt unter Verbindungen der Formel Ia oder Ib, enthält. Nach den bevorzugten Ausführungsformen des erfindungsgemäßen Verfahrens erhält man Gemische von Mannichaddukten oder chemisch einheitliche Mannichaddukte, die mindestens 70 oder mindestens 80 Mol-% Verbindungen der Formel Ia und/oder Ib umfassen.

Gewünschtenfalls können die nach den erfindungsgemäßen Verfahren erhaltenen Produkte weiter gereinigt werden, z. B. extraktiv, destillativ oder säulenchromatographisch, insbesondere wie nachstehend beschrieben.

Weiterer Gegenstand der vorliegenden Erfindung sind auch die nach dem erfindungsgemäßen Verfahren erhaltenen Mannichaddukte der Formeln Ia und Ib in Form ihrer Reinsubstanzen.

In einer bevorzugten Ausführungsform besteht das Adduktgemisch zu wenigstens 40 Mol-%, insbesondere wenigstens 50 Mol-% und besonders bevorzugt wenigstens 60 Mol-% aus wenigstens einer Verbindung, ausgewählt unter den N- oder N,N-substituierten Derivaten des N,N-Bis(2-hydroxy-5-polyisobutenylbenzyl)amins (z. B. Verbindungen der Formel Ia, worin R² für H steht, R³ für NR⁴R⁵ steht, worin R⁴ für einen Phenolrest der Formel II steht, dessen Rest R² ebenfalls für H steht, und R⁵ für einen von H und Phenolresten der Formel II verschiedenen Rest steht), 2-Aminomethyl-4-polyisobutenphenolen (z. B. Verbindungen der Formel Ia, worin R² für H steht, R³ für NR⁴R⁵ steht, worin R⁴ und R⁵ für von Phenolresten der Formel II verschiedene Reste stehen und R⁴ und R⁵ nicht gleichzeitig für H stehen), 2,6-Bisaminomethyl-4-polyisobutenphenolen (z. B. Verbindungen der Formel Ia, worin R² für CH₂NR⁴R⁵ in ortho-Position und R³ für NR⁴R⁵ steht, worin R⁴ und R⁵ für von Phenolresten der Formel II verschiedene Reste stehen und R⁴ und R⁵ nicht gleichzeitig für H stehen) und 3,4-Dihydro-1,3-2H-Benzoxazinen (z. B. Verbindungen der Formel Ib, worin R² für H und R⁶ für von H verschiedene Reste R⁴ oder R⁵ steht).

In einer weiteren bevorzugten Ausführungsform enthält das Adduktgemisch wenigstens 40 Mol-%, insbesondere wenigstens 50 Mol-% und besonders bevorzugt wenigstens 60 Mol-%, N- bzw. N,N-substituierte Derivate des 2-Aminomethyl-4-polyisobutenphenols (z. B. Verbindungen der Formel Ia, worin R² für H steht, R³ für NR⁴R⁵ steht, worin R⁴ und R⁵ für von Phenolresten der Formel II verschiedene Reste stehen und R⁴ und R⁵ nicht gleichzeitig für H stehen) und/oder 3,4-Dihydro-1,3-2H-Benzoxazins (z. B. Verbindungen der Formel Ib, worin R² für H und R⁶ für von H verschiedene Reste R⁴ oder R⁵ steht). Diese werden als Mono-Mannichaddukte bezeichnet.

Nach einer bevorzugten Ausführungsform enthalten die durch das erfindungsgemäße Verfahren erhältlichen Mannichaddukte keine oder geringe Mengen an nicht weiter umgesetzten Alkylierungsprodukten aus Reaktionsschritt a). Da die Mannichreaktion eine Gleichgewichtsreaktion ist, enthält das Produkt im Normalfall einen Restanteil an Alkylierungsprodukten aus Reaktionsschritt a). Üblicherweise beträgt der Anteil der Mannichaddukte an nicht weiter umgesetzten Polyisobutenylphenolen 0 bis 20 Mol-%, meist 1 bis 15 Mol-%, insbesondere 5 bis 10 Mol-%, bezogen auf die Gesamtmenge des erhaltenen Adduktgemischs. Eine Einstellung des erwünschten Anteils an Polyisobutenylphenolen kann über die Reaktionsführung der Schritte b) und c) oder übliche Trennverfahren erfolgen. Ein bevorzugtes Trennverfahren ist die im Folgenden beschriebene Säulenchromatographie. Da jedoch überraschenderweise ein Restanteil an nicht weiter umgesetzten Alkylierungsprodukten nicht störend und vielfach sogar vorteilhaft ist, kann im Allgemeinen sowohl auf aufwendige Verfahrensmaßnahmen für eine möglichst vollständige Umsetzung in den Schritten b) und c) als auch auf weitere Trennschritte verzichtet werden.

Die oben beschriebenen Mannichadduktgemische, insbesondere ihre stickstoffhaltigen Bestandteile, können durch Säulenchromatographie an stationären Phasen fraktioniert werden. Die Fraktionierung kann mittels einstufiger oder mehrstufiger Eluation erfolgen. Geeignete Eluenten sind beispielsweise Kohlenwasserstoffe, Alkohole, Ketone, Wasser und Gemische davon, denen gegebenenfalls Basen, z. B. Amine oder Alkalien, zugesetzt werden können. Die Fraktionierung kann Vorteilhaft durch mehrstufiges Eluieren, vorzugsweise mit wenigstens einem Kohlenwasserstoff und anschließend wenigstens einem basischen Alkohol-Wasser-Gemisch erfolgen.

Als stationäre Phasen kommen insbesondere Oxide, wie sie in der Säulenchromatographie üblich sind, in Frage. Bevorzugt werden saure Oxide, wie saures Aluminiumoxid und besonders bevorzugt saures Kieselgel. Vorzugsweise wird als basisches Alkohol-wasser-Gemisch ein Gemisch aus
a) 75 bis 99,5 Gew.-%, insbesondere 85 bis 98 Gew.-% und besonders bevorzugt 90 bis 97 Gew.-%, wenigstens eines C₂-C₄-Alkohols, insbesondere Ethanol und/oder Isopropanol, besonders bevorzugt Isopropanol,
b) 0,4 bis 24,4 Gew.-% Wasser und
c) 0,1 bis 15 Gew.-%, insbesondere 0,5 bis 10 Gew.-% und besonders bevorzugt 1 bis 5 Gew.-%, wenigstens eines bei Raumtemperatur flüchtigen Amins eingesetzt wird.

Geeignete, bei Raumtemperatur flüchtige Amine sind beispielsweise Ammoniak, Mono-C₁-C₈-alkylamine, Di-C₁-C₆-alkylamine und Tri-C₁-C₄-alkylamine, insbesondere Ammoniak, Methylamin, Ethylamin, n-Propylamin, Isopropylamin, Dimethylamin, Diethylamin, Di-n-propylamin, Diisopropylamin, Di-n-butylamin, Di-sec.-butylamin, Di-tert.-butylamin, Trimethylamin, Triethylamin, Diisopropylethylamin und Triisopropylamin. Besonders bevorzugt ist Ammoniak.

In der Regel wird die Fraktionierung durch Säulenchromatographie so durchgeführt, dass das Adduktgemisch auf eine mit einer stationären Phase gefüllte und gegebenenfalls konditionierte Säule gegeben wird. Gegebenenfalls kann anschließend in einem ersten Schritt die Säule mit dem aufgegebenen Adduktgemisch mit einem unpolaren Lösungsmittel, z. B. aliphatischen oder aromatischen Kohlenwasserstoffen, gespült werden. Dadurch lassen sich beispielsweise nicht aminhaltige Fraktionen eluieren. Die Fraktionierung des Adduktgemischs, insbesondere der aminhaltigen Komponenten, erfolgt durch vorzugsweise mehrstufiges Eluieren mit einem wie oben beschriebenen Alkohol-Wasser-Gemisch. Dabei kann die Eluation sowohl mit einem Alkohol-Wasser-Gemisch konstanter Zusammensetzung oder variabler Zusammensetzung, z. B. durch einen ein- oder mehrstufigen Stufengradienten oder kontinuierlichen Gradienten, erfolgen.

Das wie oben beschriebene Verfahren kann zum einen zum Abtrennen der nicht-aminhaltigen Bestandteile des Adduktgemisches und anschließendes Wiedergewinnen der unfraktionierten aminhaltigen Bestandteile des Adduktgemisches verwendet werden. Zum anderen werden gegebenenfalls erst die nicht stickstoffhaltigen Bestandteile des Adduktgemisches abgetrennt und anschließend die stickstoffhaltigen Bestandteile fraktioniert. Bei geeigneter Trennleistung der verwendeten Säule lassen sich die Adduktgemische gewünschtenfalls bis zu den Einzelverbindungen fraktionieren.

Vorzugsweise sind nach dem erfindungsgemäßen Verfahren Adduktgemische mit einer Polydispersität im Bereich von 1,05 bis 3,5, insbesondere 1,1 bis 2,5 und besonders bevorzugt 1,1 bis 1,9, erhältlich.

Die Einstellung der gewünschten Polydispersität kann durch gezielte Auswahl der Einsatzstoffe, Wahl der Stöchiometrie, Wahl der Temperatur und Reaktionszeit sowie gegebenenfalls der Aufarbeitung, insbesondere durch übliche Reinigungstechniken, wie Extrahieren und Destillieren und gegebenenfalls die erfindungsgemäße Fraktionierung durch Säulenchromatographie erreicht werden.

Geeignete Maßnahmen, die einzeln oder in Kombination die Bildung von Adduktgemischen mit erhöhter Wirksamkeit und/oder geringer Polydispersität begünstigen, sind beispielsweise ausgewählt unter
- Verwendung von Polyisobutenen niedriger Polydispersität,
- Verwendung von Polyisobutenen mit möglichst hohen Anteilen an terminalen Doppelbindungen,
- Einsatz der Polyisobutene im Unterschuss bei der Alkylierung der Phenole, gegebenenfalls gefolgt von einer anschließenden Abtrennung des unumgesetzten Phenols,
- Durchführen der Alkylierung bei einer möglichst geringen Temperatur, die dennoch einen vollständigen Umsatz gewährleistet, z. B. oberhalb von etwa +5 °C und unterhalb von etwa +30 °C,
- Einhaltung einer geeigneten Stöchiometrie; z. B. ein Verhältnis von Aldehyd:Amin:Polyisobutenphenol von etwa 1:1:1 oder etwa 1:2:1 (zur Herstellung von Mono-Mannichaddukten) oder 2:2:1 (zur Herstellung von Bis-Mannichaddukten) oder 2:1:1 (führt beim Einsatz von primären Aminen zur Bildung von Oxazinen) oder 2:1:2, wobei im letzten Fall vorzugsweise ein primäres Amin eingesetzt wird (führt zur Herstellung von Bisarylmonoaminen),
- Abtrennung der nicht aminhaltigen Addukte aus dem Gemisch durch säulenchromatographische Fraktionierung,
- Fraktionierung der aminhaltigen Addukte des Gemisches durch Säulenchromatographie, vorzugsweise an sauren stationären Phasen durch Eluation mit basischen Alkohol-Wasser-Gemischen.

Ein weiterer Gegenstand der Erfindung ist ein Mannichaddukt, erhältlich nach einem Verfahren wie vorstehend beschrieben.

Ebenfalls Gegenstand der vorliegenden Erfindung ist ein Mannichaddukt, enthaltend wenigstens eine Verbindung der Formel Ia und/oder Ib.

Gegenstand der vorliegenden Erfindung ist auch die Verwendung wenigstens eines oben definierten Mannichadduktes als Detergensadditiv in Kraft- und Schmierstoffzusammensetzungen, gegebenenfalls in Kombination mit weiteren üblichen Kraft- und Schmierstoffadditiven.

Als Beispiele für solche zusätzlichen Komponenten sind weitere Additive mit Detergenswirkung oder mit ventilsitzverschleißhemmender Wirkung zu nennen, wobei diese mindestens einen hydrophoben Kohlenwasserstoffrest mit einem zahlengemittelten Molekulargewicht (M_{N}) von 85 bis 20 000 und mindestens eine polare Gruppierung, ausgewählt aus
(a) Mono- oder Polyaminogruppen mit bis zu 6 Stickstoffatomen, wobei mindestens ein Stickstoffatom basische Eigenschaften hat,
(b) Nitrogruppen, gegebenenfalls in Kombination mit Hydroxylgruppen,
(c) Hydroxylgruppen in Kombination mit Mono- oder Polyaminogruppen, wobei mindestens ein Stickstoffatom basische Eigenschaften hat,
(d) Carboxylgruppen oder deren Alkalimetall- oder Erdalkalimetallsalzen,
(e) Sulfonsäuregruppen oder deren Alkalimetall- oder Erdalkalimetallsalzen,
(f) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind,
(g) Carbonsäureestergruppen,
(h) aus Bernsteinsäureanhydrid abgeleitete Gruppierungen mit Hydroxy- und/oder Amino- und/oder Amido- und/oder Imidogruppen und
(i) durch herkömmliche Mannich-Umsetzung von phenolischen Hydroxylgruppen mit Aldehyden und Mono- oder Polyaminen erzeugte Gruppierungen
aufweisen.

Als Beispiele für obige Additivkomponenten mit Detergenswirkung oder mit ventilsitzverschleißhemmender Wirkung seien zu nennen:

Mono- oder Polyaminogruppen (a) enthaltende Additive sind vorzugsweise Polyalkenmono- oder Polyalkenpolyamine auf Basis von Polypropen oder von hochreaktivem (d. h. mit überwiegend endständigen Doppelbindungen - meist in der β- und γ-Position) oder konventionellem (d. h. mit überwiegend mittenständige Doppelbindungen) Polybuten oder Polyisobuten mit M_{N} = 300 bis 5 000. Derartige Additive auf Basis von hochreaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten hochreaktiven Polyisobutens eingesetzt werden. Entsprechende Additive auf Basis von Polypropen sind insbesondere in der WO-A 94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A 97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in DE-A 196 20 262 beschrieben sind.

Nitrogruppen, gegebenenfalls in Kombination mit Hydroxylgruppen, (b) enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A 96/03367 und WO-A 96/03479 beschrieben sind. Diese Umsetzungsprodukte stellen in der Regel Mischungen aus reinen Nitropolyisobutanen (z. B. α,β-Dinitropolyisobutan) und gemischten Hydroxynitropolyisobutanen (z. B. α-Nitro-β-hydroxypolyisobutan) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit M_{N} = 300 bis 5 000, mit Ammoniak, Mono- oder Polyaminen, wie sie insbesondere in EP-A 476 485 beschrieben sind.

Carboxylgruppen oder deren Alkalimetall- oder Erdalkalimetallsalze (d) enthaltende Additive sind vorzugsweise Copolymere von C₂-C₄₀-Olefinen mit Maleinsäureanhydrid mit einer Gesamt-Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)butenaminen oder Polyetheraminen eingesetzt werden.

Sulfonsäuregruppen oder deren Alkalimetall- oder Erdalkalimetallsalze (e) enthaltende Additive sind vorzugsweise Alkalimetalloder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂- bis C₄-alkylengruppierungen (f) enthaltende Additive sind vorzugsweise Polyether oder Polyetheramine, welche durch Umsetzung von C₂- bis C₆₀-Alkanolen, C₆- bis C₃₀-Alkandiolen, Monooder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigen Alkanolen oder Polyolen, insbesondere solche mit einer Mindestviskosität von 2 mPas bei 100 °C, wie sie insbesondere in DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxyund/oder Amino- und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit M_{N} = 300 bis 5 000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A 4 849 572 beschrieben.

Durch Mannich-Umsetzung von phenolischen Hydroxylgruppen mit Aldehyden und Mono- oder Polyaminen erzeugte Gruppierungen (i) enthaltende Additive sind vorzugsweise Umsetzungsprodukte von polyisobutensubstituierten Phenolen mit Formaldehyd und Mono- oder Polyaminen wie Ethylendiamin, Diethylentriamin, Triethylentetramin, Tetraethylenpentamin oder Dimethylaminopropylamin. Die polyisobutenylsubstituierten Phenole können aus konventionellem Polyisobuten mit M_{N} > 1 000 stammen. Derartige "Polyisobuten-Mannichbasen" sind insbesondere in der EP-A 831 141 beschrieben.

Zur genaueren Definition der einzelnen aufgeführten Ottokraftstoffadditive wird hier auf die Offenbarungen der obengenannten Schriften des Standes der Technik ausdrücklich Bezug genommen.

Als Lösungs- oder Verdünnungsmittel (bei Bereitstellung von Additivpaketen) kommen aliphatische und aromatische Kohlenwasserstoffe, z. B. Solvent Naptha, in Betracht.

Weitere übliche Additivkomponenten, die mit den erfindungsgemäßen Additiven kombiniert werden können, sind beispielsweise Korrosionsinhibitoren, wie z. B. auf Basis von zur Filmbildung neigenden Ammoniumsalzen organischer Carbonsäuren oder von heterocyclischen Aromaten, Antioxidantien oder Stabilisatoren, beispielsweise auf Basis von Aminen wie p-Phenylendiamin, Dicyclohexylamin oder Derivaten davon oder von Phenolen wie 2,4-Di-tert.-butylphenol oder 3,5-Di-tert.-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl sowie Farbstoffe (Marker). Gegebenenfalls werden auch Amine zur Absenkung des pH-Wertes des Kraftstoffes zugesetzt.

Als weitere übliche Komponenten können auch Trägeröle genannt werden. Hier sind beispielsweise mineralische Trägeröle (Grundöle), insbesondere solche der Viskositätsklasse "Solvent Neutral (SN) 500 bis 2000", synthetische Trägeröle auf Basis von Olefinpolymerisaten mit M_{N} = 400 bis 1 800, vor allem auf Polybutenoder Polyisobuten-Basis (hydriert oder nicht hydriert), von Polyalphaolefinen oder Polyinternalolefinen sowie synthetische Trägeröle auf Basis alkoxylierter langkettiger Alkohole oder Phenole zu nennen. Ebenfalls geeignet als weitere Additive sind Polyalkenalkohol-Polyetheramine, wie beispielsweise in der DE-199 16 512.2 beschrieben.

Weiterer Gegenstand der vorliegenden Erfindung sind Additivkonzentrate, insbesondere Kraftstoffadditiv-Konzentrate und Schmierstoffadditiv-Konzentrate, besonders bevorzugt Kraftstoffadditiv-Konzentrate, enthaltend, neben üblichen Additivkomponenten obiger Definition, wenigstens ein erfindungsgemäßes Mannichaddukt in Anteilen von 0,1 bis 99,9 Gew.-%, bevorzugt 0,5 bis 80 Gew.-%, insbesondere 1,0 bis 60 Gew.-%, bezogen auf das Gesamtgewicht des Konzentrats.

Gegenstand der vorliegenden Erfindung sind weiterhin Kraftstoffzusammensetzungen, vor allem Ottokraftstoffzusammensetzungen, welche die erfindungsgemäßen Mannichaddukte, insbesondere Mannichaddukte der Formel I, in wirksamen Mengen enthalten. Unter wirksamen Mengen sind in der Regel bei Kraftstoffzusammensetzungen 10 bis 5 000 Gew.-ppm und insbesondere 50 bis 2 000 Gew.-ppm, bezogen auf die Gesamtmenge der Kraftstoffzusammensetzung, zu verstehen.

Ebenfalls Gegenstand der vorliegenden Erfindung sind Schmierstoffzusammensetzungen, insbesondere Schmierstoffzusammensetzungen, die 0,1 bis 10 Gew.-%, insbesondere 0,5 bis 5 Gew.-%, bezogen auf die Gesamtmenge der Schmierstoffzusammensetzung, der erfindungsgemäßen Mannichaddukte, insbesondere Mannichaddukte der Formel Ia und/oder Ib, enthalten.

Die erfindungsgemäßen Polyisobutenphenol-haltigen Mannichaddukte, insbesondere Polyisobutenphenol-haltige Mannichaddukte der Formel I, zeigen, wie im folgenden experimentellen Teil weiter veranschaulicht, eine ausgezeichnete Wirkung als ventilreinigende und ventilreinhaltende Ottokraftstoffdetergenzien. Daneben weisen sie die eingangs geschilderten Nachteile der aus dem Stand der Technik bekannten Polyalkylenphenol-Mannichaddukt-Gemischen nicht auf. Sie zeigen darüber hinaus ein sehr günstiges Viskositätsverhalten, insbesondere in der Kälte, das Formulierungs- und Anwendungsproblemen, wie z. B. Ventilstecken, vorbeugt.

### Beispiele

Die Charakterisierung der Alkylierungsprodukte und der Mannichaddukte erfolgte mittels ¹H-NMR-Spektroskopie. Bei den Mannichaddukten sind zum Teil nur die chemischen Verschiebungen (δ in ppm) der charakteristischen Signale der Methylenprotonen der Aminomethylengruppe wiedergegeben.

### I. Herstellung der Polyisobutenphenole

### Ia. Alkylierung mit einem Poylisobuten mit M_{N} = 550

In einem 4 l-Vierhalskolben wurden 404,3 g Phenol in einer Stickstoffatmosphäre bei 40 bis 45 °C aufgeschmolzen. Man tropfte 191 g BF₃-Diethyletheraddukt zu und kühlte auf 10 °C. 1 100 g Polyisobuten mit M_{N} = 550 und einem Dimethylvinylidenanteil von 85 %, gelöst in 1 000 ml Hexan, wurden innerhalb von 150 Minuten bei 5 bis 10 °C zugetropft. Innerhalb von 4 Stunden ließ man auf Raumtemperatur erwärmen und rührte über Nacht nach. Die Reaktion wurde durch Zugabe von 1 200 ml 25 %iger Ammoniaklösung beendet. Die organische Phase wurde abgetrennt und danach 8 mal mit 500 ml Wasser gewaschen, über NaSO₄ getrocknet und das Lösungsmittel sowie geringe Phenolmengen im Vakuum entfernt: 1 236 g Öl (Polyisobutenphenol).

¹H-NMR: 7,2 ppm (Dublett, 2H), 6,7 ppm (Dublett, 2H), 4,8 ppm (Singulett, 1H), 1,75 ppm (Singulett, 2H), 1,5-0,5 ppm (Singuletts, 78H).

Das entspricht einem M_{N} des Alkylrests von 550. Im Signalbereich von 7,1-6,75 ppm befinden sich kleine Signale, die auf 5 bis 10 % 2- oder 2,4-substituiertes Phenol hinweisen.

### Ib. Alkylierung mit einem Polyisobuten mit M_{N} = 750

In einem 2 l-Vierhalskolben wurden 119 g Phenol unter Stickstoff bei 40 bis 45 °C aufgeschmolzen. Man tropfte 44,1 g BF₃-Di-ethyletheraddukt zu und kühlte auf 20 bis 25 °C. 465 g Polyisobuten mit M_{N} = 750 und einem Dimethylvinylidenanteil von 85 %, gelöst in 1 500 ml Hexan, wurden innerhalb von 3 Stunden bei 20 bis 25 °C zugetropft. Man rührte über Nacht nach. Anschließend wurde die Reaktion durch Zugabe von 500 ml 25 %iger Ammoniaklösung beendet. Die organische Phase wurde abgetrennt und anschließend 8 mal mit 500 ml Wasser gewaschen, über NaSO₄ getrocknet und das Lösungsmittel im Vakuum entfernt: 481 g Öl (Polyisobutenphenol).

¹H-NMR: 7,2 ppm (Dublett, 2H), 6,7 ppm (Dublett, 2H), 4,8 ppm (Singulett, breit 1H), 1,75 ppm (Singulett, 2H), 1,5-0,5 ppm (Singuletts, 105H).

Dies entspricht einem M_{N} des Alkylrests von 740.

### II. Umsetzung der Polyisobutenphenole zu Mannichaddukten

### IIa.

In einem 1 l-Vierhalskolben mit Wasserabscheider wurden 319 g PIB-Phenol aus Beispiel Ia in 140 ml Toluol vorgelegt. Man setzte 16,5 g Paraformaldehyd zu und heizte rasch auf 110 °C. Danach wurden 56,1 g 3-(Dimethylamino)-n-propylamin zugegeben und 6 Stunden Wasser ausgekreist (destillativ entfernt). Die Lösung wurde filtriert und das Lösungsmittel im Vakuum entfernt: 356 g Öl. Das Öl wurde 2 mal mit ca. 0,5 l heißem Methanol gewaschen und im Vakuum getrocknet: 263 g Öl (Mannichaddukt).

Die ¹H-NMR-Daten (siehe Tabelle 2) sprechen dafür, dass als Hauptprodukt N-(2-Hydroxy-5-polyisobutenylbenzyl)-N-(3-dimetylaminopropyl)amin (Mono-Mannichaddukt) entstanden ist. Zusätzliche Signale bei 3,7 und 3,5 ppm sowie die Integration der Dimethylaminopropylprotonen weisen auf einen geringen Gehalt an N,N-Bis(2-Hydroxy-5-polyisobutenylbenzyl)-N-(3-dimetylaminopropyl)amin sowie an N,N-Bis(2-Hydroxy-5-polyisobutenylphenyl)methan hin. Insgesamt entspricht das Verhältnis Aromaten-/Isobutenylprotonen einem Mn des Alkylrestes von 650.

### IIb.

In einem 0,5-l Vierhalskolben mit Wasserabscheider wurden 233 g Polyisobutenphenol aus Beispiel Ib in 120 ml Toluol vorgelegt. Man setzte bei 50 °C 29 g 3-(Dimethylamino)-n-propylamin zu und tropfte 23,4 g Formaldehydlösung (37 %ig) zu und heizte auf 110 °C. Danach wurden 3 h Wasser ausgekreist (destillativ entfernt). Die Lösung wurde filtriert und das Lösungsmittel im Vakuum entfernt: 254 g Öl (Mannichaddukt).

Die ¹H-NMR-spektroskopischen Daten sind in Tabelle 2 zusammengefasst.

### IIc.

In einem 1 l-Vierhalskolben wurden 260 g Polyisobutenphenol aus Beispiel Ia vorgelegt. Man tropfte 12,6 g Paraformaldehyd und 74,8 g Di[3-(Dimethylamino)-n-propyl]amin in 100 ml Isopropanol zu, wobei die Temperatur auf 38 °C anstieg. Man rührte 1 Stunde nach und erhitzte 2 Stunden unter Rückfluss. Die Lösung wurde filtriert und das Lösungsmittel im Vakuum entfernt: 332 g Öl (Mannichaddukt).

Das ¹H-NMR-Spektrum (siehe Tabelle 2) entspricht einem M_{N} des Alkylrests von 546.

### IId.

In einem 0,5-l Vierhalskolben mit Wasserabscheider wurden 320 g Polyisobutenphenol aus Beispiel Ia und 24 g Diethylamin in 140 ml Toluol vorgelegt. Man setzte bei 90 °C 17 g Paraformaldehyd in drei Portionen zu und heizte auf Rückfluss. Anschließend wurde 3 h lang Wasser ausgekreist (destillativ entfernt). Die Lösung wurde filtriert und das Lösungsmittel im Vakuum entfernt: 355 g Öl (Mannichaddukt).

Das ¹H-NMR-Spektrum (siehe Tabelle 2) entspricht einem M_{N} des Alkylrests von 545.

In der nachfolgenden Tabelle (Tabelle 1) sind die nach dem erfindungsgemäßen Verfahren hergestellten Mannichaddukte und einige wichtige Angaben zusammengefasst. Die Mannichaddukte IIe bis IIm wurden in Analogie zu einem der für IIa, IIb oder IIc beschriebenen Verfahren hergestellt.

**Tabelle 1:**

| Mannichaddukt | Herstellung analog zu | Mn¹⁾ Alkylrest | Amin | Ansatzgröße PIB-Phenol²⁾ | Ausbeute |
|---|---|---|---|---|---|
| | | | | [Mol] | g |
| IIa | - | 550 | DMAPA³⁾ | 0,5 | 263 |
| IIb | - | 750 | DMAPA³⁾ | 0,27 | 254 |
| IIc | - | 550 | DDMAPA⁴⁾ | 0,4 | 332 |
| IId | - | 550 | DEA⁵⁾ | 0,5 | 355 |
| IIe | IIb | 550 | DMAPA³⁾ | 0,5 | 359 |
| IIf | IIb | 550 | Morpholin | 0,5 | 352 |
| IIg | IIb | 550 | MOEA⁶⁾ | 0,5 | 318 |
| IIh | IIb | 550 | MOPA⁷⁾ | 0,5 | 360 |
| IIj | IIb | 550 | MPIP⁸⁾ | 0,5 | 367 |
| IIk | IIa | 550 | EDA⁹⁾ | 0,5 | 331 |
| IIm | IIb | 750 | Morpholin | 0,29 | 272 |

| | | | | | |
|---|---|---|---|---|---|
| ¹⁾ Zahlenmittleres Molekulargewicht des zur Herstellung des Polyisobutensphenols eingesetzten Polyisobutens | | | | | |
| ²⁾ PIB-Phenol steht für Polyisobutenphenol | | | | | |
| ³⁾ 3-(Dimethylamino)-n-propylamin | | | | | |
| ⁴⁾ Di[3-(Dimethylamino)-n-propyl]amin | | | | | |
| ⁵⁾ Diethylamin | | | | | |
| ⁶⁾ 2-Methoxyethylamin | | | | | |
| ⁷⁾ 3-Methoxy-n-propylamin | | | | | |
| ⁸⁾ N-Methylpiperazin | | | | | |
| ⁹⁾ Ethylendiamin | | | | | |

**Tabelle 2:**

| ¹H-NMR-Daten der Mannichaddukte IIa bis IIm (jeder Eintrag umfasst die Signallage in ppm/das Aufspaltungsmuster/das Integral [Anzahl der H-Atome], siehe Legende) | |
|---|---|
| IIa | 7,1/DF/1; 6,9/SF/1; 6,6/D/1; 3,9-3,5/Ss/2,2; 1,8/S/2; 1,5-0,5/Ss/93; 2,7/T/1,2; 2,3/T/1,2; 2,2/S/3,6; 1,7/M/1,2. |
| | |
| IIb | 7,0-7,2/DFs/1; 7-6,8/SFs/1; 6,5-6,6/Ds/1; 3,9-3,5/Ss/2; 1,8/S/2; 1,5-0,5/Ss/107; 2,7/T/1,2; 2,3/T/1,2; 2,2/S/3,6 |
| | |
| IIc | 7,1/DF/1; 6,9/SF/1; 6,6/D/1; 3,7/S/2; 1,8/S/2; 1,5-0,5/Ss/71; 2,7/T/3,9; 2,3/T/3,9; 2,2/S/11; 1,7/M/4 |
| | |
| IId | 7,1/DF/1; 6,9/SF/1; 6,6/D/1; 3,7/S/2; 1,8/S/2; 1,5-0,5/Ss/77; 2,6/Q/3,9; 1,1/T/6 (?) |
| | |
| IIe | 7,0-7,2/DFs/1; 7-6,8/SFs/1; 6,5-6,6/Ds/1; 3,9-3,5/Ss/2; 1,8/S/2; 1,5-0,5/Ss/73; 2,7/T/1,3; 2,3/T/1,3; 2,2/S/3,8; 1,7/M/1,3 |
| | |
| IIf | 7,1/DF/1; 6,9/SF/1; 6,6/D/1; 3,7/S/2; 1,8/Ss/2; 1,5-0,5/Ss/76; 3,7/M/4; 2,5/M/4 |
| | |
| IIg | 6,9-'7,2/DFs/1; 6,8-7/SFs/1; 6,5-6,7/Ds/1; 3,9-3,7/Ss/2; 1,8/S/2; 1,5-0,5/Ss/80; 3,5/Ts/2; 3,3-2,4/Ss/3; 2,6-2,8/Ts/2 |
| | |
| IIh | 7,1/DF/1; 6,9/SF/1; 6,6/D/1; 3,9-3,6/Ss/2; 1,8/S/2; 1,5-0,5/Ss/75; 3,4/T/2; 3,2-2,3/Ss/3; 2,5-2,7/Ts/2; 2,9/M/2 |
| | |
| IIj | 7,1/DF/1; 6,9/SF/1; 6,6/D/1; 3,7/S/2; 1,8/S/2; 1,5-0,5/Ss/77; 2,5/M/8; 2,2/S/3 |
| | |
| IIk | 7,1/DFs/1; 6,9/SFs/1; 6,6/Ds/1; 3,9-3,6/Ss/2; 1,8/S/2; 1,5-0,5/Ss/78; 2,6-2,9/M/4 |
| | |
| IIm | 7,2/DF/1; 6,9/SF/1; 6,6/D/1; 3,75/S/2; 1,8/S/2; 1,5-0,5/Ss/100; 3,7/M/4; 2,5/M/4 |
| D = Dublett | |
| DF = Dublett, Feinaufspaltung | |
| S = Singulett | |
| SF = Singulett, Feinaufspaltung | |
| T = Triplett | |
| Q = Quartett | |
| M = Multiplett | |
| Index s = mehrere Signale gleicher Art | |

**Tabelle 3**

| Beispiel Nr. | Mₙ Polyisobutenylrest | Amin | PIB-Phenol ⁶⁾ [mol] | Amin [mol] | Formaldehyd [mol] | Ausbeute [g] | δ Aminomethylenprotonen [ppm] |
|---|---|---|---|---|---|---|---|
| 1 ¹⁾ | 550 | DEOHA ²⁾ | 0,167 | 0,33 | 0,35 | 136 | 3,7 |
| 2 | 750 | DMAPA ³⁾ | 0,27 | 0,29 | 0,29 | 254 | 3,9 |
| 3 | 250 | DETA ⁴⁾ | 0,43 | 1,03 | 0,95 | 260 | 3,9 + 3,75 |
| 4 | 550 | DMA ⁵⁾ | 0,39 | 0,5 | 0,47 | 266 | 3,6 |
| 5 | 700 | DMA | 0,44 | 0,57 | 0,53 | 369 | 3,6 |
| 5a | 700 ⁷⁾ | DMA | 0,41 | 0,45 | 0,45 | 360 | 3,6 |
| 5b | 700 ⁸⁾ | DMA | 0,38 | 0,41 | 0,41 | 319 | 3,6 |
| 5c | 700 ⁹⁾ | DMA | 0,43 | 0,47 | 0,47 | 366 | 3,6 |
| 6 | 700 | DEOHA | 0,43 | 0,47 | 0,47 | 366 | 3,6 |
| 7 ¹⁾ | 224 | DEOHA | 0,25 | 0,8 | 0,9 | 166 | 3,7 |
| 8 ¹⁾ | 224 | DEOHA | 0,25 | 0,27 | 0,3 | 106 | 3,75 |

| | | | | | | | |
|---|---|---|---|---|---|---|---|
| ¹⁾ statt 37 %iger Formaldehydlösung wurde Paraformaldehyd eingesetzt | | | | | | | |
| ²⁾ Diethanolamin | | | | | | | |
| ³⁾ Dimethylaminopropylamin | | | | | | | |
| ⁴⁾ Diethylamin | | | | | | | |
| ⁵⁾ Dimethylamin | | | | | | | |
| ⁶⁾ Polyisobutenylphenol | | | | | | | |
| ⁷⁾ eingesetztes Polyisobuten (PIB) aus Mischung von PIB Mₙ = 550 und PIB Mₙ = 1000 | | | | | | | |
| ⁸⁾ eingesetztes Polyisobuten durch Raffination | | | | | | | |
| ⁹⁾ eingesetztes Polyisobuten durch Direktsynthese | | | | | | | |

Analog der folgenden Herstellungsvorschrift für Beispiel 1 wurden die Beispiele der vorherigen Tabelle 3 hergestellt.

### Beispiel 1

In einem 0,5 1-Vierhalskolben mit Wasserabscheider wurden 0,167 mol PIB-Phenol aus Beispiel Ia in 200 ml Toluol vorgelegt. Man setzte 0,33 mol Diethanolamin zu und tropfte bei 50 °C unter Stickstoff als Schutzgas 0,35 mol Formaldehyd als 37 %ige Formalinlösung zu. Danach wurde das Reaktionsgemisch bis zum Rückfluss des Lösungsmittels erhitzt und 3 Stunden lang Wasser ausgekreist (destillativ entfernt). Die Lösung wurde filtriert und das Lösungsmittel im Vakuum entfernt: 136 g Öl (Mannichaddukt).

### III. Säulenchromatographische Fraktionierung der Mannichaddukte

Das Öl aus Beispiel IIb wurde an einer Silicagel-Säule (Länge: 100 cm, Durchmesser: 5 cm) aufgetrennt. Mit Toluol wird zunächst nicht umgesetztes Polyisobutenphenol eluiert, anschließend kann gegebenenfalls gebildetes 2,2'-Dihydroxy-5,5'-dipolyisobutenyldiphenylmethan eluiert werden. Aminhaltige Derivate wurden mit Isopropanol/25 %iger wässriger Ammoniaklösung (95/5, v/v) eluiert.
¹H-NMR:
a) 2,2'-Dihydroxy-5,5'-dipolyisobutenyl-diphenylmethan
   ¹H-NMR: 7,1 ppm (Dublett, Feinaufspaltung, 2H), 6,9 ppm (Singulett, Feinaufspaltung, 2H), 6,7 ppm (Dublett, 2H), 3,5 ppm (Singulett, 2H), 1,75 ppm (Singulett, 4H), 1,5-0,5 ppm (Singuletts, 156H)
b) N-3-(Dimethylaminopropyl)-N-(2-hydroxy-5-polyisobutenylbenzyl)amin
   ¹H-NMR: 7,1 ppm (Dublett, Feinaufspaltung, 1H), 6,9 ppm (Singulett, Feinaufspaltung, 1H), 6,7 ppm (Dublett, 1H), 3,5 ppm (Singulett, 2H), 2,5 ppm (Triplett, 2 H), 2,2 ppm (Triplett, 2 H), 2,1 ppm (Singulett, 6 H), 1,75 ppm (Singulett, 2H), 1,7 ppm (Multiplett, 4 H),1,5-0,5 ppm (Singuletts, 75H)
c) N-3-(Dimethylaminopropyl)-N,N-bis(2-hydroxy-5-polyisobutenylbenzyl)amin
   ¹H-NMR: 7,1 ppm (Dublett, Feinaufspaltung, 2H), 6,9 ppm (Singulett, Feinaufspaltung, 2H), 6,7 ppm (Dublett, 2H), 3,75 ppm (Singulett, 4H), 2,5 ppm (Triplett, 2 H), 2,2 ppm (Triplett, 2 H), 2,1 ppm (Singulett, 6 H), 1,75 ppm (Singulett, 4H), 1,7 ppm (Multiplett, 4 H),1,5-0,5 ppm (Singuletts, 78H)

### IV. Prüfung der anwendungstechnischen Eigenschaften

Im Folgenden wurde als Schmierstoff jeweils Referenzöl RL 189/5 eingesetzt.

### IVa.

In einem Opel Kadett-Motor wurde die Einlassventilsauberkeit gemäß CEC-Methode F-05-A-93 getestet. Hierfür wurde ein marktüblicher Eurosuper-Grundkraftstoff gemäß EN 228 eingesetzt, welchem entweder kein Kraftstoffadditiv (Vergleichsbeispiel 1) oder nicht erfindungsgemäße Kraftstoffadditive auf Basis von Mannichaddukten (Vergleichsbeispiel 2 und 3) oder ein erfindungsgemäßes Polyisobutenphenol-haltiges Mannichaddukt zugesetzt wurde (Beispiel 1).

Das nicht erfindungsgemäße Kraftstoffadditiv aus Vergleichsbeispiel 2 wurde gemäß Vergleichsbeispiel 2 der EP-A-0 831 141 hergestellt.

Das erfindungsgemäße Polyisobutenphenol-haltige Mannichaddukt wurde gemäß Ia und IIa hergestellt.

Die wichtigsten Parameter, die Dosierung und die anwendungstechnischen Ergebnisse sind in Tabelle 4 zusammengefasst.

### IVb.

In einem Mercedes Benz M 102 E-Motor wurde die Einlassventilsauberkeit gemäß CEC-Methode F-04-A-87 getestet. Hierfür wurde ein marktüblicher Eurosuper-Grundkraftstoff gemäß EN 228 eingesetzt, welchem entweder kein Kraftstoffadditiv (Vergleichsbeispiel 3) oder ein Kraftstoffadditivgemisch aus 40 Gew.-% eines synthetischen Trägeröls (auf Basis eines polybutoxylierten Fettalkohols) und 60 Gew.-% eines nicht erfindungsgemäßen Kraftstoffadditivs (Vergleichsbeispiel 4) oder erfindungsgemäße Polyisobutenphenol-haltige Mannichaddukte zugesetzt wurden (Beispiele 2 bis 4). Das Additiv wurde als 50 gew.-%ige Lösung in einem C₁₀-C₁₃-Paraffin eingesetzt.

Als nicht erfindungsgemäßes Kraftstoffadditiv wurde ein Polyisobutenylamin, erhältlich durch Hydroformylierung und anschließende reduktive Aminierung eines Polyisobutens eingesetzt.

Einige Parameter der eingesetzten Additive, die Dosierung und die anwendungstechnischen Ergebnisse sind in der Tabelle 5 zusammengefasst.

**Tabelle 5**

| Beispiel Nr. | Mₙ ¹⁾ | Amin | Dosierung [mg/kg] | Δ IVD ²⁾ [mg/Ventil] |
|---|---|---|---|---|
| VB3 | - | - | 200 | 151 |
| VB4 | - | NH₃ | 200 | 64 |
| B2 ⁴⁾ | 700 | DMA ³⁾ | 200 | 52 |
| B3 ⁵⁾ | 700 | DMA | 200 | 22 |
| B4 ⁶⁾ | 700 | DMA | 200 | 43 |

| | | | | |
|---|---|---|---|---|
| ¹⁾ zahlenmittleres Molekulargewicht des Polyisobutenylrests | | | | |
| ²⁾ IVD = intake valve deposits; Mittelwert der Ablagerungen aller Ventile | | | | |
| ³⁾ Dimethylamin | | | | |
| ⁴⁾ Zur Alkylierung des Phenols wurde ein hochreaktives PIB mit einem zahlenmittleren Molekulargewicht von 700 eingesetzt. | | | | |
| ⁵⁾ Zur Alkylierung wurde ein Gemisch hochreiner Polyisobutene mit zahlenmittleren Molekulargewichten der Einzelkomponenten von 550 und 1 000 eingesetzt. Das zahlenmittlere Molekulargewicht des Gemischs betrug 700. | | | | |
| ⁶⁾ Aus einem Mannichadduktgemisch, erhalten aus hochreinem PIB mit einem zahlenmittleren Molekulargewicht von 1 000, Phenol und DMA wurde eine Fraktion extrahiert, deren Polyisobutenylrest ein zahlenmittleres Molekulargewicht von 700 aufwies. | | | | |

**Tabelle 4**

| | M_{N}¹⁾ | Amin | Dosierung [mg/kg] | Ventilablagerungen [mg/Ventil] | | | | Mittelwert²⁾ |
|---|---|---|---|---|---|---|---|---|
| | | | | 1 | 2 | 3 | 4 | |
| VB1 | - | - | - | 450 | 188 | 316 | 366 | 330 |
| VB2 | 1000 | EDA ³⁾ | 400 | 9 | 127 | 7 | 193 | 84 |
| B1 | 550 | DMAPA ⁴⁾ | 400 | 0 | 1 | 0 | 0 | 0,25 |

| | | | | | | | | |
|---|---|---|---|---|---|---|---|---|
| ¹⁾ Zahlenmittleres Molekulargewicht des Polyisobutenylrests | | | | | | | | |
| ²⁾ Mittelwert der Ablagerungen aus den vier Ventilen | | | | | | | | |
| ³⁾ Ethylendiamin | | | | | | | | |
| ⁴⁾ 3-(Dimethylamino)-n-propylamin | | | | | | | | |

## Patentansprüche

1. Verfahren zur Herstellung Polyisobutenphenol-haltiger Mannichaddukte durch
a) Alkylierung eines Phenols mit hochreaktivem Polyisobuten mit einem zahlenmittleren Molekulargewicht von weniger als 1 000 und einer Polydispersität von kleiner 3,0 bei einer Temperatur unterhalb von etwa 50 °C in Gegenwart eines Alkylierungskatalysators;
b) Umsetzung des Reaktionsproduktes aus a) mit
b1) einem Aldehyd, ausgewählt unter Formaldehyd, einem Oligomer und einem Polymer des Formaldehyds und
b2) wenigstens einem Amin, das wenigstens eine primäre oder wenigstens eine sekundäre Aminofunktion aufweist.

2. Verfahren nach Anspruch 1, wobei als Amin 3-(Dimethylamino)-n-propylamin, Di[3-(dimethylamino)-n-propyl]amin, Dimethylamin, Diethylamin oder Morpholin eingesetzt wird.

3. Verfahren nach einem der Ansprüche 1 oder 2, wobei man ein Adduktgemisch erhält, das mindestens 40 Mol-% Verbindungen der Formel Ia und/oder Ib umfasst, 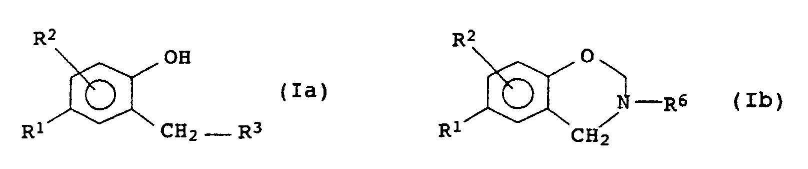 worin
R¹ für einen terminal gebundenen Polyisobutenrest,
R² für H, C₁- bis C₂₀-Alkyl, C₁- bis C₂₀-Alkoxy, Hydroxy, einen Polyalkylenrest oder CH₂NR⁴R⁵ steht, wobei R⁴ und R⁵ die unten angegebenen Bedeutungen aufweist, und
R³ für NR⁴R⁵ steht, worin R⁴ und R⁵ unabhängig voneinander ausgewählt sind unter H, C₁- bis C₂₀-Alkyl-, C₃- bis C₈-Cycloalkyl- und C₁- bis C₂₀-Alkoxyresten, die durch Heteroatome, ausgewählt unter N und O, unterbrochen und/oder substituiert sein können, und Phenolresten der Formel II, 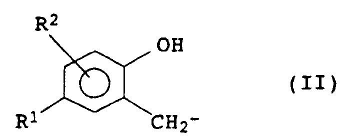 worin R¹ und R² wie oben definiert sind;
mit der Maßgabe, dass R⁴ und R⁵ nicht gleichzeitig für H oder Phenolreste der Formel II stehen; oder R⁴ und R⁵ gemeinsam mit dem N-Atom, an das sie gebunden sind, einen 5-, 6- oder 7-gliedrigen Cyclus bilden, der ein oder zwei Heteroatome, ausgewählt unter N und O, aufweist und mit einem, zwei oder drei C₁- bis C₆-Alkylresten substituiert sein kann; und
R⁶ für einen von H verschiedenen Rest R⁴ oder R⁵ steht.

4. Verfahren nach einem der vorhergehenden Ansprüche, wobei man ein Addukt mit einer Polydispersität im Bereich von 1,1 bis 3,5 erhält.

5. Verfahren nach einem der vorhergehenden Ansprüche, wobei R¹ ein zahlenmittleres Molekulargewicht im Bereich von 300 bis 850 aufweist.

6. Verfahren nach einem der Ansprüche 1 bis 5, wobei man das Reaktionsgemisch aus b) durch Säulenchromatographie an einer sauren stationären Phase durch mehrstufiges Eluieren mit
- wenigstens einem Kohlenwasserstoff und anschließend
- wenigstens einem basischen Alkohol-Wasser-Gemisch
fraktioniert.

7. Verfahren nach Anspruch 6, wobei als basisches Alkohol-Wasser-Gemisch ein Gemisch aus
a) 75 bis 99,5 Gew.-% wenigstens eines C₂- bis C₄-Alkohols,
b) 0,4 bis 24,4 Gew.-% Wasser und
c) 0,1 bis 15 Gew.-% wenigstens eines bei Raumtemperatur flüchtigen Amins eingesetzt wird.

8. Verfahren nach einem der vorhergehenden Ansprüche, wobei man ein Adduktgemisch erhält, das 0 bis 20 Mol-%, bevorzugt 1 bis 15 Mol-%, nicht weiter umgesetzte Polyisobutenylphenole aus Reaktionsschritt a) enthält.

9. Mannichaddukt, erhältlich nach einem Verfahren gemäß einem der Ansprüche 1 bis 8.

10. Mannichaddukt, erhältlich nach dem Verfahren gemäß Anspruch 3, das mindestens 40 Mol-% Verbindungen der Formel Ia und/oder Ib umfasst.

11. Verwendung eines Mannichadduktes nach Anspruch 9 oder 10, als Detergensadditiv in Kraft- und Schmierstoffzusammensetzungen.

12. Additiv-Konzentrat, enthaltend neben üblichen Additivkomponenten wenigstens ein Mannichaddukt gemäß Anspruch 9 oder 10 in Mengen von 0,1 bis 99,9 Gew.-%, bevorzugt 0,5 bis 80 Gew.-%.

13. Kraftstoffzusammensetzung, enthaltend eine Hauptmenge eines flüssigen Kohlenwasserstoffkraftstoffs sowie eine detergensaktive Menge wenigstens eines Addukts nach Anspruch 9 oder 10.

14. Schmierstoffzusammensetzung, enthaltend eine Hauptmenge eines flüssigen, halbfesten oder festen Schmierstoffs sowie eine detergensaktive Menge wenigstens eines Addukts nach Anspruch 9 oder 10.

15. Verwendung einer Kraftstoffzusammensetzung nach Anspruch 13 als Otto- oder Dieselkraftstoff.

## Claims

1. A process for the preparation of polyisobutenylphenol-containing Mannich adducts by
a) alkylation of a phenol with highly reactive polyisobutene having a number average molecular weight of less than 1000 and a polydispersity of less than 3.0 at below about 50°C in the presence of an alkylation catalyst;
b) reaction of the reaction product from a) with
b1) an aldehyde chosen from formaldehyde, an oligomer and a polymer of formaldehyde and
b2) at least one amine which has at least one primary or at least one secondary amino function.

2. A process as claimed in claim 1, wherein the amine used is 3-(dimethylamino)-n-propylamine, di(3-(dimethylamino)-n-propyl]amine, dimethylamine, diethylamine or morpholine.

3. A process as claimed in either of claims 1 and 2, wherein an adduct mixture is obtained which comprises at least 40 mol% of compounds of the formula Ia and/or Ib, 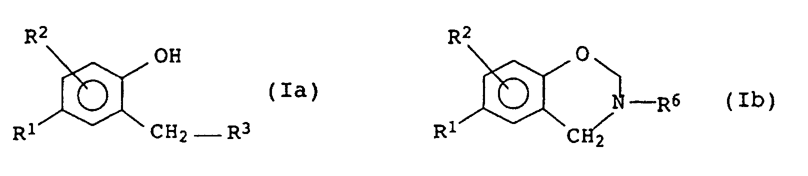 where
R¹ is a terminally bonded polyisobutenyl radical,
R² is H, C₁- to C₂₀-alkyl, C₁- to C₂₀-alkoxy, hydroxyl, a polyalkylenyl radical or CH₂NR⁴R⁵, where R⁴ and R⁵ have the meanings stated below, and
R³ is NR⁴R⁵, where R⁴ and R⁵, independently of one another, are selected from H, C₁- to C₂₀-alkyl, C₃- to C₈-cycloalkyl and C₁- to C₂₀-alkoxy radicals which may be interrupted and/or substituted by heteroatoms selected from N and O, and phenol radicals of the formula II 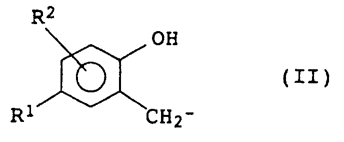 where R¹ and R² are as defined above;
with the proviso that R⁴ and R⁵ are not simultaneously H or phenol radicals of the formula II; or R⁴ and R⁵, together with the N atom to which they are bonded, form a 5-, 6- or 7-membered cyclic structure which has one or two heteroatoms selected from N and O and may be substituted by one, two or three C₁- to C₆-alkyl radicals; and
R⁶ is a radical R⁴ or R⁵ other than H.

4. A process as claimed in any of the preceding claims, wherein an adduct having a polydispersity of from 1.1 to 3.5 is obtained.

5. A process as claimed in any of the preceding claims, wherein R¹ has a number average molecular weight of from 300 to 850.

6. A process as claimed in any of claims 1 to 5, wherein the reaction mixture from b) is fractionated by column chromatography over an acidic stationary phase by multistage elution with
- at least one hydrocarbon and then
- at least one basic alcohol/water mixture.

7. A process as claimed in claim 6, wherein the basic alcohol/water mixture used is a mixture of
a) from 75 to 99.5% by weight of at least one C₂- to C₄-alcohol,
b) from 0.4 to 24.4% by weight of water and
c) from 0.1 to 15% by weight of at least one amine which is volatile at room temperature.

8. A process as claimed in any of the preceding claims, wherein the adduct mixture obtained includes from 0 to 20 mol%, preferably 1 to 15 mol%, of polyisobutenylphenols from reaction step a) which have not been further reacted.

9. A Mannich adduct obtainable by a process as claimed in any of claims 1 to 8.

10. A Mannich adduct obtainable by the process as claimed in claim 3, which comprises at least 40 mol% of compounds of the formula Ia and/or Ib.

11. The use of a Mannich adduct as claimed in claim 9 or 10 as a detergent additive in fuel and lubricant compositions.

12. An additive concentrate containing, in addition to conventional additive components, at least one Mannich adduct as claimed in claim 9 or 10 in amounts of from 0.1 to 99.9% by weight, preferably 0.5 to 80% by weight.

13. A fuel composition containing a main amount of a liquid hydrocarbon fuel and an amount, having detergent activity, of at least one adduct as claimed in claim 9 or 10.

14. A lubricant composition containing a main amount of a liquid, semisolid or solid lubricant and an amount, having detergent activity, of at least one adduct as claimed in claim 9 or 10.

15. The use of a fuel composition as claimed in claim 13 as a gasoline or diesel fuel.

## Revendications

1. Procédé de fabrication d'adduits de Mannich contenant du polyphénol d'isobutène par
a) alkylation d'un phénol avec du polyisobutène très réactif avec une masse moléculaire moyenne en nombre de moins de 1000 et une polydispersité de moins de 3,0 à une température en dessous d'environ 50°C en présence d'un catalyseur d'alkylation ;
b) transformation du produit de la réaction de a) avec
b1) un aldéhyde, choisi parmi le formaldéhyde, un oligomère et un polymère du formaldéhyde et
b2) au moins une amine qui comporte au moins une fonction amine primaire ou au moins une secondaire.

2. Procédé selon la revendication 1, dans lequel est utilisé en tant qu'amine la 3-(diméthylamino)-n-propylamine, la di[3-(diméthylamino)-n-propyl]amine, la diméthylamine, la diéthylamine ou la morpholine.

3. Procédé selon l'une des revendications 1 ou 2, par lequel on obtient un mélange d'adduits qui comprend au moins 40 % molaire de composés de formule Ia et/ou Ib, 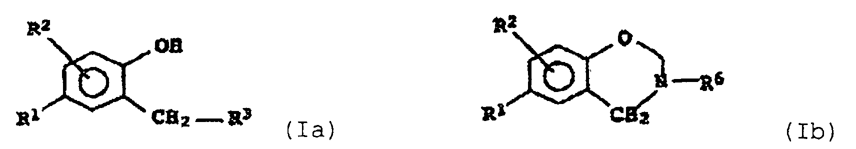 dans lesquelles
R¹ représente un reste polyisobutène lié en position terminale,
R² représente H, un alkyle en C₁ à C₂₀, un alcoxy en C₁ à C₂₀, un hydroxy, un reste polyalkyle ou CH₂NR⁴R⁵, dans laquelle R⁴ et R⁵ présentent la signification donnée ci-dessous, et
R³ représente NR⁴R⁵, dans laquelle R⁴ et R⁵ indépendamment l'un de l'autre sont choisis parmi H, des restes alkyle en C₁ à C₂₀, cycloalkyle en C₃ à C₈ et alcoxy en C₁ à C₂₀, qui peuvent être interrompus et/ou substitués par des hétéroatomes, choisis parmi N et O, et des restes phénol de formule II, 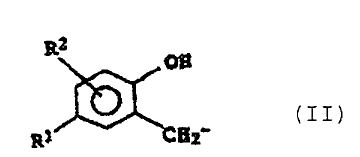 dans laquelle R¹ et R² sont définis comme ci-dessus ;
dans la mesure où R⁴ et R⁵ ne représentent pas simultanément H ou des restes phénol de formule II ; ou R⁴ et R⁵ forment ensemble avec l'atome de N auquel ils sont liés un cycle à 5, 6 ou 7 éléments qui présente un ou deux hétéroatomes choisis parmi N et O et peut être substitué par un, deux ou trois restes alkyle en C₁ à C₆ ; et
R⁶ représente un de 8 différents restes R⁴ ou R⁵.

4. Procédé selon l'une des revendications précédentes, par lequel on obtient un adduit avec une polydispersité dans le domaine de 1,1 à 3,5.

5. Procédé selon l'une des revendications précédentes, dans lequel R¹ présente une masse moléculaire moyenne en nombre dans le domaine de 300 à 850.

6. Procédé selon l'une des revendications 1 à 5, dans lequel on fractionne le mélange réactionnel de b) par chromatographie sur colonne sur une phase stationnaire acide par élution en plusieurs étapes avec
- au moins un hydrocarbure et immédiatement après
- au moins un mélange basique d'alcool et d'eau.

7. Procédé selon la revendication 6, dans lequel on utilise en tant que mélange basique d'alcool et d'eau un mélange de
a) 75 à 99,5 % en poids d'au moins un alcool en C₂ à C₄,
b) 0,4 à 24,4 % en poids d'eau et
c) 0,1 à 15 % en poids d'au moins une amine volatile à température ambiante.

8. Procédé selon l'une des revendications précédentes, par lequel on obtient un mélange d'adduit qui contient 0 à 20 % molaire, de préférence 1 à 15 % molaire, des polyphénols d'isobutène non transformés plus avant de l'étape de réaction a).

9. Adduit de Mannich, que l'on peut obtenir selon un procédé conformément à l'une des revendications 1 à 8.

10. Adduit de Mannich, que l'on peut obtenir selon le procédé conformément à la revendication 3 qui comprend au moins 40 % molaire de composés de formule Ia et/ou Ib.

11. Utilisation d'un adduit de Mannich selon la revendication 9 ou 10, en tant qu'additif de détergent dans les compositions de carburant et de lubrifiant.

12. Concentré d'additif contenant à côté des composants d'additif habituels au moins un adduit de Mannich selon la revendication 9 ou 10 en une quantité de 0,1 à 99,9 % en poids, de préférence 0,5 à 80 % en poids.

13. Composition de carburant contenant une quantité principale d'un carburant hydrocarbure liquide ainsi qu'une quantité à activité détergente d'au moins un adduit selon la revendication 9 ou 10.

14. Composition de lubrifiant contenant une quantité principale d'un lubrifiant liquide, semi-solide ou solide ainsi qu'une quantité à activité détergente d'au moins un adduit selon la revendication 9 ou 10.

15. Utilisation d'une composition de carburant selon la revendication 13 en tant qu'essence ou essence diesel.
